Europäisches Patentamt

European Patent Office

Office européen des brevets

(11) Numéro de publication: **0 168 632**
**A1**

# (12) DEMANDE DE BREVET EUROPEEN

(21) Numéro de dépôt: 85107215.7

(22) Date de dépôt: 13.06.85

(51) Int. Cl.⁴: **E 21 B 43/013,** E 21 B 43/017, E 21 B 33/037, E 21 B 23/12, E 21 B 34/04, B 65 G 51/24

(30) Priorité: 14.06.84 FR 8409323
06.12.84 FR 8418612

(43) Date de publication de la demande: 22.01.86
Bulletin 86/4

(84) Etats contractants désignés: DE FR GB IT NL

(71) Demandeur: ALSTHOM, 38, avenue Kléber, F-75784 Paris Cédex 16 (FR)

(72) Inventeur: Roblin, Jean-Paul, 7, rue Henri Jullin, F-44300 Nantes (FR)
Inventeur: Rodriguez, Francis, 4, rue de la Boissière, F-44120 Vertou (FR)

(74) Mandataire: Weinmiller, Jürgen et al, Zeppelinstrasse 63, D-8000 München 80 (DE)

(54) Module fonctionnel amovible pour installation de production pétrolière sous-marine.

Module fonctionnel amovible pour installation de production pétrolière sous-marine destiné à coopérer avec une structure réceptrixe fixe (14) située au fond de la mer et comprenant un alvéole (100), ledit module comportant un corps (17) comprenant des moyens de verrouillage (32) du module dans l'alvéole de la structure réceptrice et une tête de manutention (30) située à la partie supérieure du corps, ledit module comportant au moins un organe fonctionnel (70) comprenant des moyens de commande hydrauliques (73), ledit organe et les moyens de commande devant communiquer avec des conduites (77, 78) aboutissant à ladite structure réceptrice, le module et la structure réceptrice comportant en outre des moyens (89, 90) de positionnement relatif angulaire, caractérisé en ce qu'il comporte une portée mâle (74, 75) d'appui constituée par au moins une portion d'une surface latérale d'un tronc de cône d'axe vertical coopérant avec au moins une portion (16a, 16b) de surface femelle complémentaire de l'alvéole de ladite structure réceptrice, et en ce que la continuité desdites communications entre le module et la structure réceptrice est réalisée au niveau de ladite portée d'appui qui comporte des moyens d'étanchéité (60).

Module fonctionnel amovible pour installation de production pétrolière sous-marine

La présente invention concerne un module fonctionnel amovible pour installation de production pétrolière sous-marine.

On sait que les installations de ce type comportent de nombreux modules fonctionnels relevables tels que des modules de vannes, des modules sélecteurs destinés à relier une conduite d'entrée à l'une ou l'autre d'une pluralité de sorties etc... Tous ces modules comportent des organes ou des conduites qui doivent communiquer avec des conduites extérieures liées à ladite structure. Pour réaliser ces communications, il est connu, une fois le module mis à sa place, d'utiliser des moyens internes au module, par exemple un chariot sur lequel se trouve placés les organes à relier avec les conduites extérieures ; ce chariot est alors déplacé, par des moyens hydrauliques commandés à la surface, vers les liaisons à effectuer.

Le document FR-A 2 500 525 décrit un tel dispositif. Cependant, un tel système est compliqué et nécessite du matériel spécial à l'intérieur du module : chariot, vérins etc.... utilisé uniquement lors de la pose du module ou de son relevage.

En outre, les parties à relier doivent être munies de connecteurs spéciaux.

La présente invention a pour but de proposer un module beaucoup plus simple, donc plus économique, applicable à tout module fonctionnel pour lequel des communications de fluides doivent avoir lieu entre des conduites externes, liées à une structure réceptrice et des organes quelconques du module.

L'invention a ainsi pour objet un module fonctionnel amovible pour installation de production pétrolière sous-marine destiné à coopérer avec une structure réceptrice fixe située au fond de la mer et comprenant un alvéole, ledit module comportant un corps, comprenant des moyens de verrouillage du module dans l'alvéole de la structure réceptrice et une tête de manutention située à la partie supérieure du corps, ledit module comportant au moins un organe fonctionnel comprenant des moyens de commande hydrauliques, ledit organe et les moyens de commande devant communiquer avec des conduites aboutissant à ladite structure réceptrice, le module et la structure réceptrice comportant en outre des moyens de positionnement relatif angulaire, caractérisé en ce qu'il comporte une portée mâle d'appui constituée par au moins une portion d'une surface latérale d'un tronc de cône d'axe vertical coopérant avec au moins une portion de surface femelle complémentaire de l'alvéole de ladite structure réceptrice, et en ce que la continuité desdites communications entre le module et la structure réceptrice est réalisée au niveau de ladite portée d'appui qui comporte des moyens d'étanchéité.

Selon une réalisation particulière, les moyens de verrouillage comprennent des chiens basculants qui viennent s'agripper sur une couronne d'ancrage solidaire de la structure support et qui sont manoeuvrés par une chemise annulaire mue par au moins un vérin.

Lesdits moyens d'étanchéité sont avantageusement constitués par des dispositifs à bague.

Selon une première réalisation, s'appliquant à un module sélecteur, une extrémité de chacune de n conduites de sortie, ainsi qu'une extrémité d'une conduite d'entrée, est liée à ladite structure réceptrice et aboutit au niveau de ladite portion de surface femelle complémentaire, ledit corps étant fermé, portant ladite portée mâle d'appui et étant muni d'un orifice d'entrée et de n orifices de sortie aménagés dans ladite portée, ledit corps comportant en son intérieur un bâti support de n tronçons de conduites, chaque tronçon de conduite comportant une extrémité d'entrée et une extrémité de sortie, les extrémités d'entrée des n tronçons de conduites étant verticalement alignées, des moyens permettant de faire coulisser verticalement ledit bâti à l'intérieur dudit corps de manière à faire défiler ladite extrémité d'entrée des n tronçons de conduites devant ledit orifice d'entrée dudit corps, des moyens permettant de bloquer ledit bâti de manière à faire correspondre l'une quelconque, au choix, des n extrémités d'entrée avec l'orifice d'entrée dudit corps, l'extrémité de sortie de chaque tronçon de conduite aboutissant en face de l'un des n orifices de sortie du corps lorsque son extrémité d'entrée est située en face de l'orifice d'entrée du corps, lesdits moyens de positionnement angulaire faisant correspondre l'orifice d'entrée et les n orifices de sortie dudit corps avec l'extrémité de la conduite d'entrée et les extrémités des n conduites de sortie liées à ladite structure réceptrice, ladite portée d'appui assurant en outre la continuité étanche d'au moins une conduite de commande desdits moyens permettant de faire coulisser verticalement ledit bâti.

Avantageusement, ledit corps a une forme générale cylindrique, ladite portée mâle d'appui étant située au voisinage de sa partie centrale, la partie inférieure du corps étant fermée par un fond fixe et la partie supérieure par un couvercle au moyen de brides et boulons avec interposition d'un joint d'étanchéité.

Selon une deuxième réalisation, ledit organe fonctionnel est une vanne commandée comportant au moins une extrémité d'entrée, une extrémité de sortie et au moins une conduite de commande.

Selon une caractéristique particulière de cette deuxième réalisation, ladite portée mâle d'appui est constituée directement par les extrémités d'entrée et de sortie du corps de vanne lui-même qui est fixé sous ledit corps du module renfermant lesdits moyens de commande hydraulique de la vanne.

Ainsi, dans le module selon l'invention, la continuité des conduites et leur étanchéité à leur raccordement s'effectue par simple positionnement du module sur la structure réceptrice. Il n'y a plus aucun mécanisme auxiliaire pour réaliser ces liaisons.

On va maintenant décrire deux exemples de réalisations de l'invention en se référant au dessin ci-joint dans lequel :

- Les figures 1 à 4 montrent un premier exemple de l'invention s'appliquant à un module sélecteur.

- Les figures 5 et 6 montrent un deuxième exemple dans lequel il s'agit d'un module de vanne.

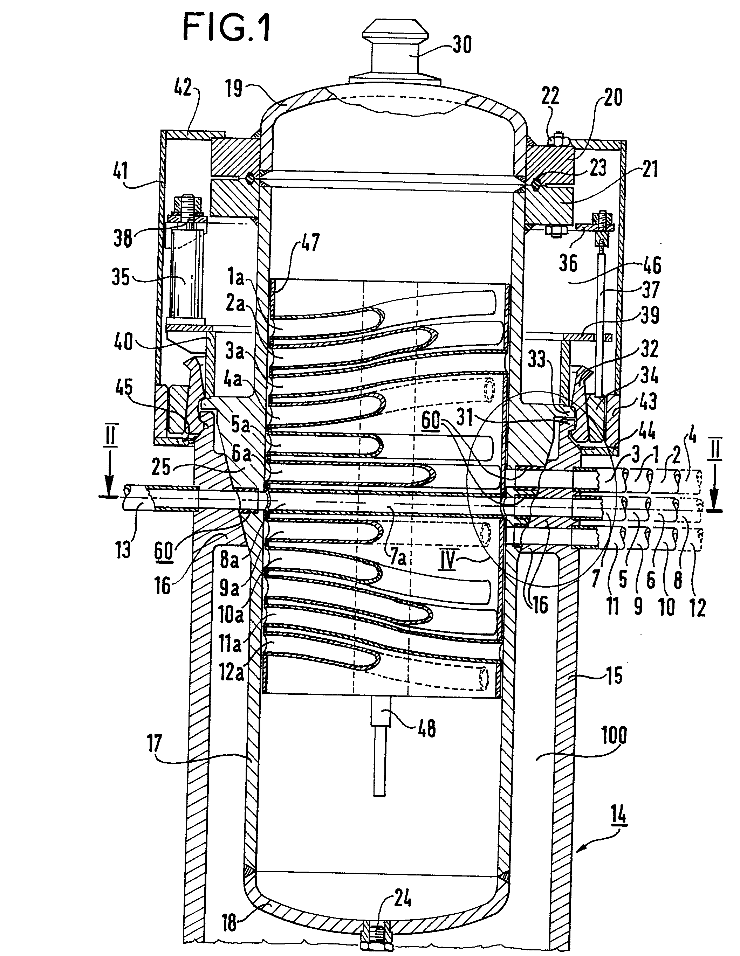

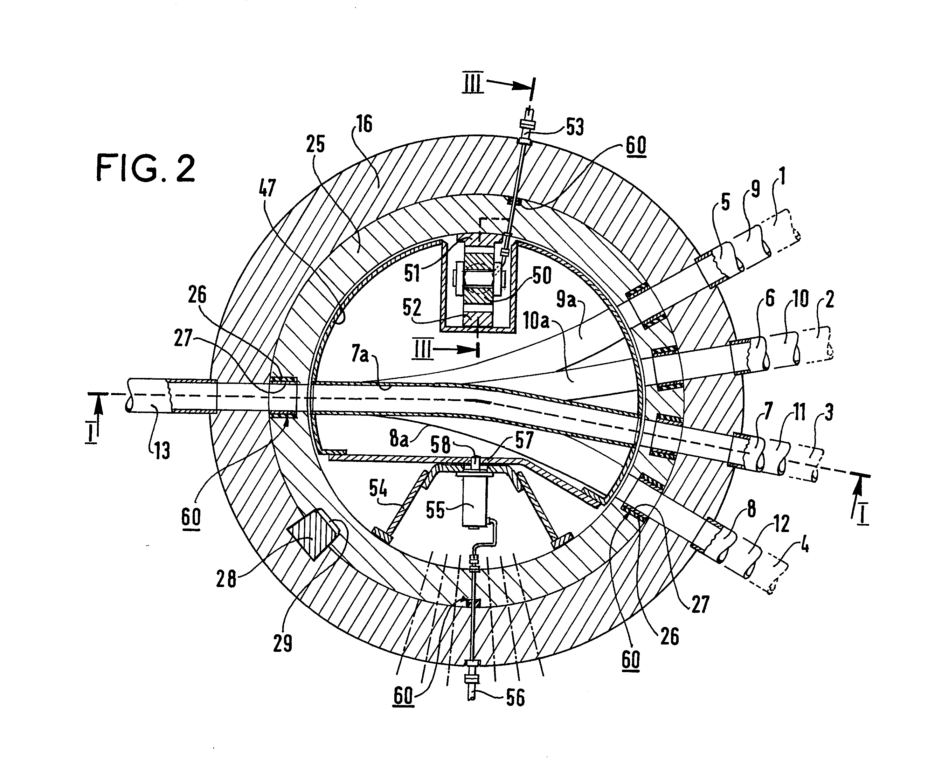

- La figure 1 montre le module sélecteur en coupe selon I-I de la figure 2.

- La figure 2 est une coupe selon II-II de la figure 1.

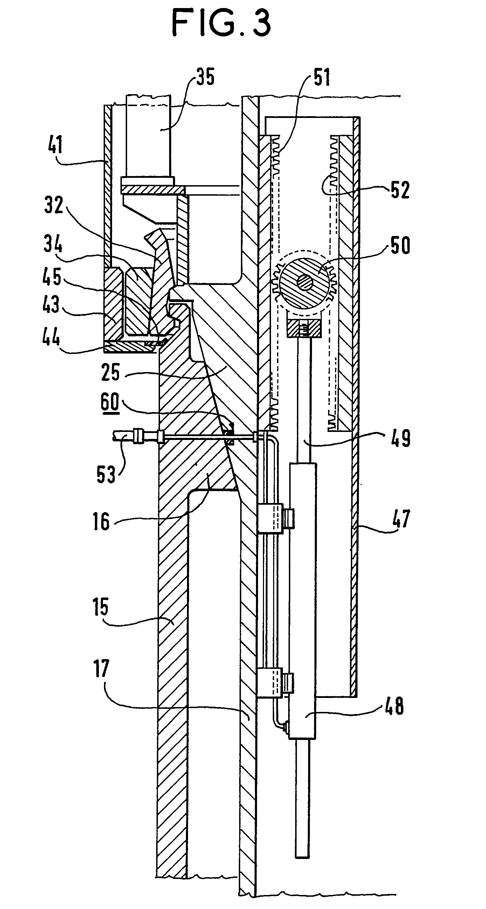

- La figure 3 est une vue partielle du module en coupe selon III-III de la figure 2.

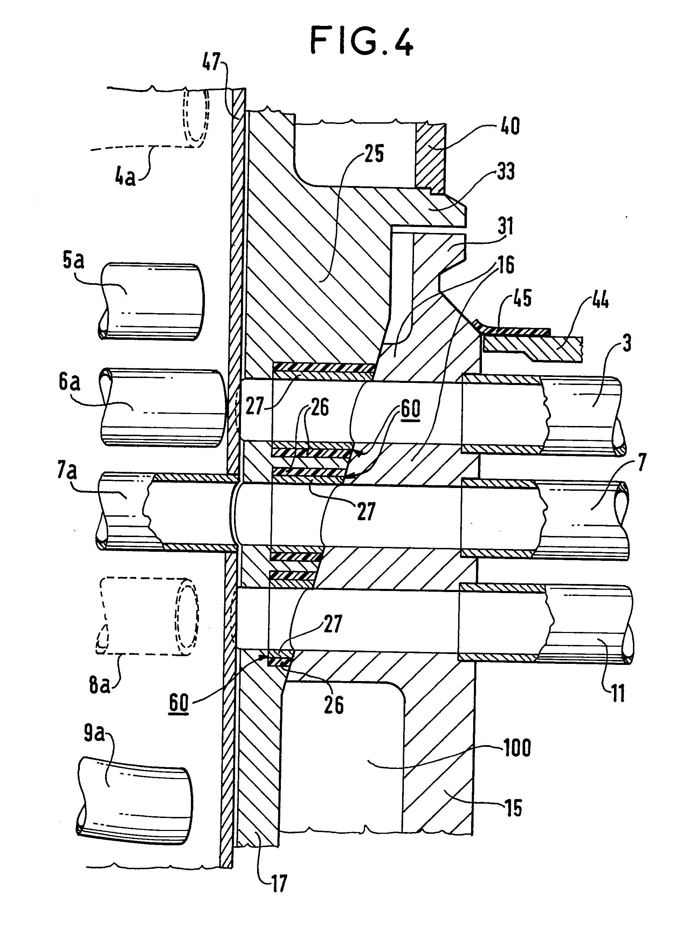

- La figure 4 est une vue partielle montrant le détail repéré par la flèche IV de la figure 1.

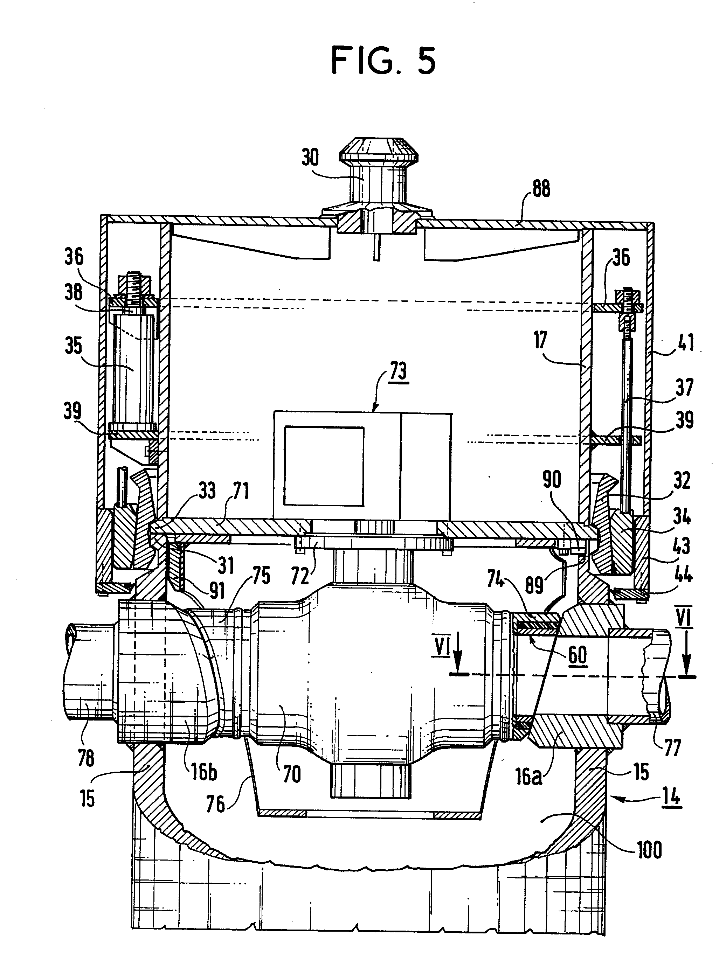

- La figure 5 montre le module de vanne en coupe axiale.

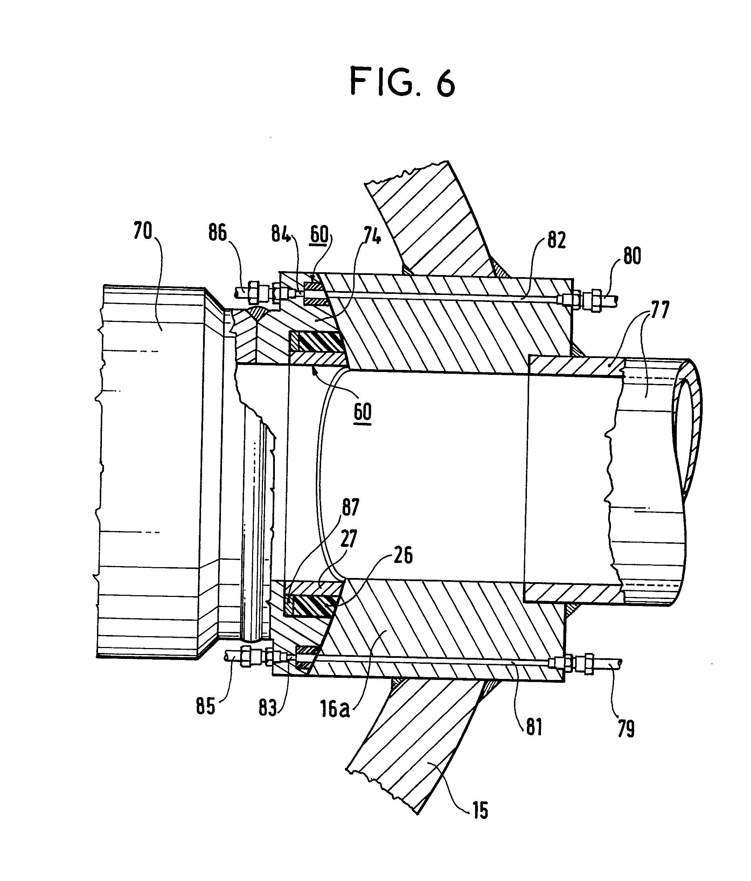

- La figure 6 est une vue partielle en coupe selon VI-VI de la figure 5.

Le module sélecteur représenté figures 1 à 4 a pour but de permettre la liaison, à volonté, entre l'une quelconque de n conduites de sortie, ici douze dans l'exemple décrit repérées 1 à 12, et une conduite d'entrée 13.

Ces conduites 1 à 12 proviennent chacune d'une tête de puits et au moins une vanne , non représentée, est placée sur chaque conduite entre la tête de puits correspondante et son arrivée sur une structure réceptrice 14 du module sélecteur.

Cette structure réceptrice 14 comporte une paroi cylindrique 15, délimitant un alvéole 100 pour le module sélecteur et, à sa partie supérieure, une paroi 16 délimitant sur sa face interne une surface conique femelle. Les douze conduites 1 à 12 aboutissent sur la structure support 14 au niveau de la paroi 16 servant de portée conique femelle d'appui pour le module sélecteur.

La conduite d'entrée 13 aboutit également à la structure support 14 au niveau de la paroi 16. Cette conduite 13 est liée à une architecture sous-marine comprenant la structure 14. La conduite 13 provient de la surface où elle est raccordée à des installations permettant l'introduction d'outils et leur propulsion, par un fluide sous pression, vers l'une ou l'autre des têtes de puits par l'intermédiaire du module sélecteur.

Le module sélecteur comporte un corps 17 cylindrique, fermé à sa partie inférieure par un fond soudé 18 et à sa partie supérieure par un couvercle 19 au moyen de brides 20 et 21 et de boulons tels que 22, un joint d'étanchéité métallique 23 est interposé entre les deux brides 20 et 21.

Un bouchon de purge 24 est installé sur le fond 18.

Vers la partie centrale du corps 17, le module comporte une portée extérieure mâle d'appui 25 à surface de contact conique adaptée à coopérer avec la surface conique interne de la paroi 16 de la structure support.

Dans cette portée conique 25 sont percés douze orifices de sortie correspondant aux douze conduites de sortie 1 à 12. Dans l'exemple décrit, ces douze conduites sont réparties, comme on le voit sur les figures 1 et 2, sur trois niveaux, chaque niveau comportant quatre conduites réparties sur environ 65°.

Ces orifices sont munis d'une bague d'étanchéité en élastomère 26, voir détail figure 4, maintenue par une bague métallique interne 27. Sur la figure 1 on a repéré cet ensemble 26 et 27 par une référence unique 60.

Dans le plan de la coupe de la figure 1, on voit les orifices de sortie correspondant aux conduites de sortie 3, 7 et 11.

De la même façon, un orifice d'entrée, correspondant à la conduite d'entrée 13 est percé dans la portée conique 25. Cet orifice est également muni d'une bague d'étanchéité 26 en élastomère maintenue par une bague métallique interne 27. Comme précédemment, l'ensemble de ces deux bagues est référencé 60 sur la figure 1.

Une clavette 28 et une rainure 29, voir figure 2, permettent de positionner correctement le module sélecteur dans le cône femelle de la structure réceptrice.

Lors du montage des bagues d'étanchéité 26, dans lesdits orifices, leur extrémité extérieure dépasse légèrement la surface conique de la portée mâle 25 de manière à s'écraser contre la surface conique femelle de la paroi 16 lors de la pose et du verrouillage du module sur la structure réceptrice, assurant ainsi la continuité de l'étanchéité des conduites au niveau de leur passage de la paroi 16 à la portée 25.

Le module comporte à sa partie supérieure une tête de manutention 30 permettant le raccordement à un outil de manoeuvre suspendu à un train de tiges pour la mise en place du sélecteur sur sa structure support 14.

Une conduite ombilicale est accolée au train de tiges pour la télécommande des organes de manoeuvre de l'outil.

La partie supérieure de la structure support 14 porte une couronne d'ancrage 31 permettant le verrouillage du module sur son support par l'intermédiaire de chiens basculants 32.

Les chiens basculants 32 sont situés entre une portée circulaire 33 située à la partie supérieure de la portée conique 25 et une chemise annulaire 34 de manoeuvre des chiens 32. La chemise annulaire 34 est actionnée par des vérins, tels que celui 35, par exemple au nombre de six, par l'intermédiaire d'un plateau 36 et de tiges, telles que 37, liées d'une part à la chemise 34 et d'autre part au plateau 36. Il y a par exemple douze tiges 37. Le plateau 36 est lié aux tiges 38 des vérins 35.

Les vérins 35 sont fixés sur un plateau 39 lié à la portée circulaire 33 du module par un tube cylindrique 40. Comme on le voit sur la figure 1, le module est verrouillé sur sa structure support 14 lorsque les tiges 38 des vérins 35 sont rentrées, ceci pour éviter que les tiges ne se corrodent.

Pour protéger le mécanisme de verrouillage, il est entouré par un tube de capotage 41 fixé à un anneau 42 lui-même fixé à la bride 20, par exemple au moyen de vis non représentées. A sa partie inférieure, le tube de capotage 41 est soudé à un anneau 43 permettant de fixer, par vis non représentées, un disque de fermeture 44 muni d'une languette souple 45. L'intérieur de ce capotage est rempli d'huile. L'outil de manoeuvre comprend des organes de connexions, en coopération avec la tête de manutention 30, de manière à assurer l'alimentation hydraulique des vérins 35 et à permettre de remplir la cavité 46 en huile. A cet effet, des conduits, non représentés, sortent de la tête de manutention 30 et aboutissent aux vérins et à la cavité 46.

Bien entendu des raccords sur ces conduits permettent de séparer le couvercle 19 du corps 17 du module.

Enfin, le module sélecteur comprend en son intérieur un bâti support 47 de douze tronçons de conduites repérés 1a à 12a. Ces douze tronçons de conduites comportent chacun une extrémité d'entrée à gauche sur les figures 1 et 2 et une extrémité de sortie, à droite sur les figures 1 et 2. Les extrémités d'entrée des douze tronçons de conduites 1a à 12a sont alignées verticalement.

Le bâti 47 peut coulisser verticalement à l'intérieur du corps 17 du module. Ainsi, lors du coulissement du bâti 47 dans le corps 17, on peut faire correspondre successivement chacune des extrémités d'entrée des tronçons de conduites avec l'orifice d'entrée de la conduite d'entrée 13.

La forme des tronçons de conduite est telle que lorsqu'un tronçon, 1a par exemple, a son extrémité d'entrée en face de la conduite d'entrée 13, son extrémité de sortie se trouve en face de la conduite de sortie homologue : 1 pour 1a, 2 pour 2a etc.....

La figure 3 montre le mécanisme permettant de faire coulisser verticalement le bâti support des tronçons de conduites.

Il comprend un vérin 48, fixé au corps 17 du module sélecteur et dont la tige 49 est munie d'un pignon 50. Le pignon 50 engrène d'une part sur une crémaillère fixe 51 liée au module et d'autre part sur une crémaillère 52 liée au bâti support 47.

Le vérin 48 est alimenté par une conduite 53 liée à l'architecture sous-marine et aboutissant à la paroi 16 de la structure support. La continuité de l'étanchéité de la conduite, au niveau de l'interface entre partie conique mâle et surface conique femelle de réception est assurée de la même manière que pour les conduites 1 à 13 par le moyen 60 d'une bague d'étanchéité en élastomère 26 et d'une bague métallique de maintien 27.

Enfin un châssis fixe 54, lié au corps 17, soutient douze vérins 55 alignés, superposés, dont le pas est identique à celui séparant l'extrémité d'entrée des douze tronçons de conduites 1a à 12a.

Ces vérins sont alimentés par des conduites telles que 56 liées à l'architecture sous-marine et aboutissant toujours à la paroi 16. Comme ci-dessus, la continuité de l'étanchéité de ces conduites est assurée par le même dispositif d'étanchéité 60 que précédemment.

En face de ces vérins, le bâti support 47 comporte un trou 57 dans lequel peuvent rentrer les tiges 58 des vérins 55.

Ainsi, lorsque le vérin 48 est alimenté, pour faire coulisser le bâti 47, on alimente en outre le vérin 55 correspondant au tronçon de conduite que l'on veut positionner. Sa tige 58 frotte donc contre la paroi du bâti 47 jusqu'à ce que le trou 57 arrive en face du vérin en question, permettant à sa tige de pénétrer dans le trou et de bloquer le bâti.

Le module de vanne représenté figures 5 et 6 est construit selon le même principe que le module sélecteur décrit précédemment. Les mêmes organes sont repérés par les mêmes références.

Cependant, dans le module de vanne représenté, l'organe fonctionnel du module : la vanne à l'intérieur de son corps de vanne 70 n'est pas située à l'intérieur du corps 17 du module mais à l'extérieur, au-dessous de celui-ci, et fixé à un fond de corps 71 par une bride 72. Ici, la portée circulaire 33, pour le verrouillage du module sur la structure réceptrice 14 au moyen des chiens 32, est constituée par la périphérie extérieure du fond de corps 71. Seuls, les moyens de commande hydrauliques 73 de la vanne sont situés dans l'intérieur du corps de module 17.

Il résulte de cette disposition, que la partie mâle d'appui du module est constituée directement par les extrémités d'entrée et de sortie 74 et 75 du corps de vanne lui-même. On n'a donc pas là une couronne conique complète d'appui mais simplement deux portions de surfaces coniques d'appui. De la même façon, la paroi 16 femelle d'appui correspondante de la structure réceptrice 14 est constituée par deux portions de parois 16a et 16b et non pas par une couronne complète comme le montre bien la figure 6.

Bien entendu, on pourrait aussi très bien placer la vanne à l'intérieur du corps 17 et alors c'est le corps 17 qui porterait, comme dans l'exemple précédent cette portée d'appui qui pourrait d'ailleurs tout aussi bien être une couronne d'appui complète sur 360°, ou ne comporter que deux portions de portée d'appui en face des extrémités d'entrée et de sortie du corps de vanne alors raccordées au corps de module 17 au niveau de ces portions de portée d'appui.

Le corps de vanne 70 est protégé par une jupe de protection 76.

Les portées femelles d'appui, à surface conique, 16a et 16b reçoivent des extrémités de conduites d'entrée et de sortie 77 et 78.

L'alimentation hydraulique des moyens de commande 73 est réalisée au moyen de conduites extérieures 79 et 80 reliées à la portée femelle d'appui 16a. Ces conduites se prolongent dans les portées d'appui 16a et 74 par des canaux 81, 82, 83 et 84. Enfin, des conduites 85 et 86 sont liées à la portée d'appui 74 et vont rejoindre les moyens de commande 73. Ces conduites 85 et 86 ne sont pas représentées sur la figure 5 et elles sont seulement amorcées sur la figure 6.

L'étanchéité de ces conduites ainsi que des conduites d'entrée et de sortie 77 et 78, à l'interface de communication entre le module et la structure réceptrice est réalisée comme dans le cas du module sélecteur, par des dispositifs à bague placés sur la portée mâle d'appui. Un tel dispositif comprend une bague en élastomère 26 maintenue par une bague métallique interne 27. On peut également comme on l'a représenté sur la figure 6 placer une rondelle de réglage 87.

Sur la figure 4 relative au module sélecteur, on n'a pas placé de rondelle de réglage mais on peut également en mettre une. Pour l'étanchéité de l'interface des conduites de commande, on a repéré l'ensemble par la référence 60 à cause de l'échelle trop petite.

L'extrémité supérieure du corps 17 est fermée par un couvercle 88 qui porte la tête de manutention 30.

Enfin, la structure réceptrice 14 comporte à son extrémité supérieure, au niveau de la couronne d'ancrage 31, une rainure 89 destinée à coopérer avec un ergot 90 fixé au fond de corps 71 de manière à assurer le bon positionnement angulaire du module dans l'alvéole 100. En outre, pour faciliter le guidage du module lors de sa mise en place, trois pièces guides chanfreinées 91 sont fixées à 120° l'une de l'autre à la partie supérieure de la jupe de protection 76.

REVENDICATIONS

1/ Module fonctionnel amovible pour installation de production pétrolière sous-marine destiné à coopérer avec une structure réceptrice fixe (14) située au fond de la mer et comprenant un alvéole (100), ledit module comportant un corps (17) comprenant des moyens de verrouillage (32) du module dans l'alvéole de la structure réceptrice et une tête de manutention (30) située à la partie supérieure du corps, ledit module comportant au moins un organe fonctionnel (70) comprenant des moyens de commande hydrauliques (73), ledit organe et les moyens de commande devant communiquer avec des conduites (77, 78) aboutissant à ladite structure réceptrice, le module et la structure réceptrice comportant en outre des moyens (89, 90) de positionnement relatif angulaire, caractérisé en ce qu'il comporte une portée mâle (74, 75) d'appui constituée par au moins une portion d'une surface latérale d'un tronc de cône d'axe vertical coopérant avec au moins une portion (16a, 16b) de surface femelle complémentaire de l'alvéole de ladite structure réceptrice, et en ce que la continuité desdites communications entre le module et la structure réceptrice est réalisée au niveau de ladite portée d'appui qui comporte des moyens d'étanchéité (60).

2/ Module fonctionnel selon la revendication 1, caractérisé en ce que lesdits moyens de verrouillage comprennent des chiens basculants (32) qui viennent s'agripper sur une couronne d'ancrage (31) solidaire de la structure support, et qui sont manoeuvrés par une chemise annulaire (34) mue par au moins un vérin (35).

3/ Module fonctionnel selon la revendication 1, caractérisé en ce que lesdits moyens d'étanchéité sont constitués par des dispositifs à bague (60).

4/ Module fonctionnel selon l'une des revendications 1, 2 ou 3, caractérisé en ce qu'une extrémité de chacune de n conduites de sortie (1 à 12), ainsi qu'une extrémité d'une conduite d'entrée (13), est liée à ladite structure réceptrice (14) et aboutit au niveau de ladite portion (16) de surface femelle complémentaire, en ce que ledit corps (17) est fermé, porte ladite portée mâle d'appui (25) et est muni d'un orifice d'entrée et de n orifices de sortie aménagés dans ladite portée et en ce que ledit corps comporte en son intérieur un bâti support (47) de n tronçons de conduites (1a à 12a), chaque tronçon de conduite comportant une extrémité d'entrée et une extrémité de sortie, les extrémités d'entrée des n tronçons de conduites étant verticalement alignées, des moyens (48 à 52) permettant de faire coulisser verticalement ledit bâti à l'intérieur dudit corps de manière à faire défiler ladite extrémité d'entrée des n tronçons de conduites devant ledit orifice d'entrée dudit corps, des moyens (55 à 58) permettant de bloquer ledit bâti de manière à faire correspondre l'une quelconque, au choix, des n extrémités d'entrée avec l'orifice d'entrée dudit corps, l'extrémité de sortie de chaque tronçon de conduite aboutissant en face de l'un des n orifices de sortie du corps lorsque son extrémité d'entrée est située en face de l'orifice d'entrée du corps, lesdits moyens de positionnement angulaires (28, 29) faisant correspondre l'orifice d'entrée et les n orifices de sortie dudit corps avec l'extrémité de la conduite d'entrée et les extrémités des n conduites de sortie liées à ladite structure réceptrice, ladite portée d'appui (25) assurant en outre la continuité étanche d'au moins une conduite de commande (53) desdits moyens (48 à 52) permettant de faire coulisser verticalement ledit bâti.

5/ Module fonctionnel selon la revendication 4, caractérisé en ce que ladite portée mâle d'appui est constituée par une surface latérale complète d'un tronc de cône et en ce que la surface femelle complémentaire couvre également 360°.

6/ Module fonctionnel selon la revendication 5, caractérisé en ce que ledit corps a une forme générale cylindrique, ladite portée mâle d'appui étant située au voisinage de sa partie centrale, la partie inférieure du corps étant fermée par un fond fixe (18) et la portée supérieure par un couvercle (19) au moyen de brides (20, 21) et boulons (22) avec interposition d'un joint d'étanchéité (23).

7/ Module fonctionnel selon l'une des revendications 1, 2 ou 3, caractérisé en ce que ledit organe fonctionnel est une vanne commandée (70) comportant au moins une extrémité d'entrée (74), une extrémité de sortie (75) et au moins une conduite de commande (85, 86).

8/ Module fonctionnel selon la revendication 7, caractérisé en ce que ladite portée mâle d'appui est constituée directement par les extrémités d'entrée et de sortie du corps de vanne lui même qui est fixé sous ledit corps (17) du module renfermant lesdits moyens de commande hydrauliques (73) de la vanne.

FIG.1

FIG. 2

0168632

FIG.3

0168632

# FIG.4

0168632

## FIG. 5

0168632

# FIG. 6

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int. Cl.4) |
|---|---|---|---|
| X | US-A-3 957 079 (WHITEMAN) * Figures 1,2; colonne 3, lignes 8-24; colonne 4, lignes 4-21 * | 1,7 | E 21 B 43/013 E 21 B 43/017 E 21 B 33/037 E 21 B 23/12 E 21 B 34/04 B 65 G 51/24 |
| A | | 5,6,8 | |
| | --- | | |
| X | US-A-3 460 614 (BURGESS) * Colonne 3, lignes 10-16,25-32 * | 1,7 | |
| A | | 5,6,8 | |
| | --- | | |
| X | US-A-3 840 071 (BAUGH) * Colonne 6, lignes 37-43; colonne 4, lignes 5-14,42-46; colonne 4, ligne 66 - colonne 5, linge 2 * | 1,3,7 | |
| Y | * Colonne 4, lignes 5-14 * | 2 | **DOMAINES TECHNIQUES RECHERCHES (Int. Cl.4)** E 21 B B 65 G |
| A | | 5,6,8 | |
| | --- | | |
| Y | US-A-4 260 022 (BILDERBEEK) * Colonne 7, lignes 27-37 * | 2 | |
| A | * Résumé * | 1,4,6 | |
| | --- -/- | | |

Le présent rapport de recherche a été établi pour toutes les revendications

| Lieu de la recherche | Date d'achèvement de la recherche | Examinateur |
|---|---|---|
| LA HAYE | 26-09-1985 | SOGNO M.G. |

# RAPPORT DE RECHERCHE EUROPEENNE

Numéro de la demande

EP 85 10 7215

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int Cl 4) |
|---|---|---|---|
| Y | US-A-4 223 920 (BILDERBEEK)<br><br>* Colonne 3, lignes 28-44,54-61; colonne 4, lignes 2-7; colonne 6, lignes 29-64 * | 1,3,7, 8 | |
| A | | 5 | |
| | --- | | |
| Y | GB-A-2 086 452 (BURNSIDE)<br><br>* Page 4, lignes 53-57,86-112 * | 1,3,7, 8 | |
| A | | 5 | |
| | --- | | |
| A | US-A-4 291 724 (MILLER)<br><br>* Résumé; colonne 2, lignes 41-46 * | 1,2,4, 6 | |
| | | | DOMAINES TECHNIQUES RECHERCHES (Int. Cl.4) |
| | --- | | |
| A | US-A-4 378 123 (LARGENT)<br>* Colonne 2, lignes 1-19; revendications 2,3 * | 1,3,5 | |
| | --- | | |
| A | FR-A-2 015 285 (DE VRIES)<br><br>* Page 3, lignes 19-23; revendication 1; page 4, lignes 27-30 * | 1,4,6, 7 | |
| | --- | | |
| A | US-A-4 015 660 (LEWIS)<br>* Revendication 1 * | 1,4 | |
| | --- -/- | | |

Le présent rapport de recherche a été établi pour toutes les revendications

| Lieu de la recherche | Date d'achèvement de la recherche | Examinateur |
|---|---|---|
| LA HAYE | 26-09-1985 | SOGNO M.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

Office européen
des brevets

**RAPPORT DE RECHERCHE EUROPEENNE**

0168632

EP 85 10 7215

Page 3

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int. Cl.4) |
|---|---|---|---|
| A,D | FR-A-2 500 525 (ROBLIN) <br> * Page 3, lignes 24-27; revendications 1-3 * | 1,4,7 | |
| | ----- | | |
| | | | **DOMAINES TECHNIQUES RECHERCHES (Int. Cl.4)** |

Le présent rapport de recherche a été établi pour toutes les revendications

| Lieu de la recherche | Date d'achèvement de la recherche | Examinateur |
|---|---|---|
| LA HAYE | 26-09-1985 | SOGNO M.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82